# FASCICULE DE BREVET EUROPEEN

(11) **EP 0 514 240 B1**
(45) Date de publication et mention de la délivrance du brevet: **04.01.1995**
(21) Numéro de dépôt: 92401230.5
(22) Date de dépôt: 30.04.1992
(51) Int. Cl.: B60T 13/57

(54) **Servomoteur pneumatique**
Pneumatischer Bremskraftverstärker
Pneumatic servo motor

(30) Priorité: 14.05.1991 FR 9105843
(43) Date de publication de la demande: 19.11.1992
(73) Titulaire: ALLIEDSIGNAL EUROPE SERVICES TECHNIQUES, 93700 Drancy (FR)
(72) Inventeur: Gautier, Jean-Pierre AlliedSignal Europe, F-93700 Drancy (FR); Verbo, Ulysse AlliedSignal Europe, F-93700 Drancy (FR); Perez, Miguel AlliedSignal Europe, F-93700 Drancy (FR)
(74) Mandataire: Bentz, Jean-Paul

(56) Documents cités:
- DE-A- 3 924 672
- FR-A- 2 551 009
- GB-A- 2 054 777
- GB-A- 2 237 082

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique un piston comportant une partie tubulaire arrière et une paroi mobile qui définit une chambre avant reliée en permanence à une source de dépression et une chambre arrière reliée sélectivement à la chambre avant ou à l'atmosphère par un moyen de valve actionné par une tige de commande susceptible de s'appuyer, par l'intermédiaire d'un plongeur sur l'une des faces d'un disque de réaction solidaire d'une tige de poussée, le moyen de valve comportant un clapet coopérant par une partie active avec un premier siège de valve formé sur le plongeur et avec un second siège de valve formé sur le piston, et la tige de commande étant rappelée vers l'arrière au moyen d'un ressort logé dans un espace annulaire entre cette tige de commande et la partie tubulaire arrière du piston en amont du moyen de valve, ce ressort étant formé de spires qui définissent une surface, le servomoteur comprenant, d'un côté au moins du ressort, des moyens de guidage d'air propres à augmenter l'angle sous lequel l'air en mouvement dans l'espace annulaire attaque ladite surface de spires.

De tels servomoteurs, tels qu'illustrés par exemple par le document EP-A-0 004 477, s'ils ont un fonctionnement satisfaisant, présentent néanmoins quelques inconvénients. C'est ainsi que, pour éviter que la tige de commande n'ait une course morte trop longue, on est obligé de concevoir le moyen de valve de façon telle que la "levée de clapet" entre le clapet et le second siège de valve soit la plus faible possible. Il s'ensuit que, lors du freinage, le passage offert à l'air atmosphérique vers la chambre arrière est de section très réduite. Le fonctionnement de ces servomoteurs est donc accompagné de bruits d'aspiration d'air, qui peuvent devenir gênants, d'autant plus que la structure du moyeu du piston induit en plus des turbulences importantes dans l'air en mouvement.

On connaît, par exemple des documents FR-A-2 551 009 ou DE-A-3 413 739, des servomoteurs pneumatiques dans lesquels l'extrémité arrière du plongeur a été modifiée pour guider l'air en mouvement vers la chambre arrière, les autres parties du servomoteur restant conventionnelles. Il s'ensuit que ces dispositifs sont pratiquement aussi bruyants que des dispositifs classiques.

On connaît également, du document DE-A-3 924 672, un servomoteur du type rappelé plus haut, et correspondant au préambule de la revendication principale, ce servomoteur comprenant, d'un côté au moins du ressort, des moyens de guidage d'air propres à augmenter l'angle sous lequel l'air en mouvement dans l'espace annulaire attaque ladite surface des spires.

Dans ce contexte, la présente invention a pour objet de prévoir un servomoteur dont le fonctionnement soit silencieux, et repose notamment sur la mise en évidence du fait qu'une circulation d'air suivant une direction voisine de celle de la surface de spires du ressort de rappel met celui-ci en vibration et constitue une cause majeure de bruit de fonctionnement.

A cette fin, le servomoteur de l'invention est essentiellement caractérisé en ce que les moyens de guidage comprennent une surface de guidage concave aval formée dans la tige de commande en aval du ressort.

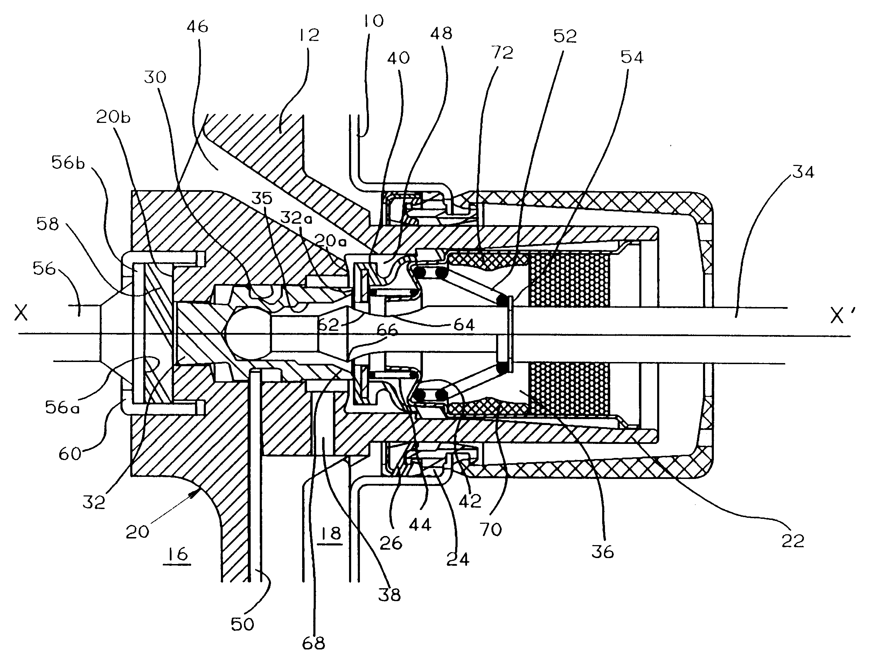

D'autres buts, caractéristiques et avantages ressortiront de la description qui suit d'un mode de réalisation de la présente invention, donnée à titre non limitatif, en référence aux dessins annexés dans lesquels :
- La Figure Unique est une vue de côté, en coupe longitudinale, représentant la partie centrale d'un servomoteur pneumatique d'assistance au freinage réalisé conformément à la présente invention.

La Figure représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur de la Figure comprend une enveloppe extérieure 10 en forme de coquille, présentant une symétrie de révolution autour d'un axe X-X'. Seule la partie centrale arrière de cette enveloppe 10 est représentée sur la Figure.

Une paroi mobile 12 définit à l'intérieur de l'espace délimité par l'enveloppe 10 une chambre avant 16 et une chambre arrière 18. La paroi mobile 12 est associée à une membrane déroulante souple en élastomère (non représentée), dont le bord périphérique extérieur est fixé de façon étanche sur l'enveloppe extérieure 10, et dont le bord périphérique intérieur est reçu de façon étanche dans un piston creux d'assistance 20 disposé selon l'axe X-X' du servomoteur. Ce piston creux 20 se prolonge vers l'arrière sous la forme d'une partie tubulaire 22 qui traverse de façon étanche la paroi arrière de l'enveloppe 10. L'étanchéité de cette traversée est assurée par un joint d'étanchéité annulaire armé 24 qui est fixé par une bague 26 dans une partie centrale tubulaire prolongeant vers l'arrière la paroi arrière de l'enveloppe 10.

Un ressort de compression (non représenté) interposé entre le piston 20 et la paroi avant (non représentée) de l'enveloppe extérieure 10 maintient normalement le piston 20 dans une position arrière de repos illustrée sur la Figure, dans laquelle la chambre arrière 18 présente son volume minimal et la chambre avant 16 son volume maximal.

Dans la partie centrale de la paroi mobile située en avant de la partie arrière tubulaire 22, le piston 20 présente un alésage 30 dans lequel est reçu en coulissement un plongeur 32 présentant également une symétrie de révolution autour de l'axe X-X′. L'extrémité avant d'une tige de commande 34 du servomoteur, disposée également selon l'axe X-X′, est montée rotulant dans un alésage borgne 35 formé dans le plongeur 32. L'extrémité arrière (non représentée) de cette tige 34, qui fait saillie à l'extérieur de la partie tubulaire 22 du piston 20, est commandée directement par la pédale de frein du véhicule (non représentée).

L'espace annulaire 36 délimité entre la tige de commande 34 et la partie tubulaire 22 du piston 20 débouche vers l'atmosphère extérieure à l'arrière du servomoteur, par exemple par l'intermédiaire d'un filtre à air. Vers l'avant, ce même espace annulaire peut communiquer avec la chambre arrière 18 au travers d'un passage radial 38 formé dans la partie centrale du piston, lorsque des moyens d'assistance commandés par le plongeur 32 sont actionnés.

De façon classique, ces moyens d'assistance comprennent une valve trois voies comportant un clapet annulaire 40 monté dans la partie tubulaire du piston et deux sièges de valve annulaires 20a et 32a formés respectivement sur la partie centrale du piston 20 et sur le plongeur 32.

Le clapet 40 constitue l'extrémité avant, de plus petit diamètre, d'un manchon souple en élastomère dont l'extrémité arrière se termine par un bourrelet monté de façon étanche à l'intérieur de la partie tubulaire 22 du piston 20. Ce bourrelet est maintenu en place par une coupelle métallique 42, sur laquelle prend appui un ressort de compression 44 tendant à déplacer le clapet 40 vers l'avant.

Le siège de valve annulaire 32a est formé sur la face d'extrémité arrière du plongeur 32. De façon comparable, le siège de valve annulaire 20a est formé sur la face d'extrémité arrière de la partie centrale du piston 20, autour du siège 32a. Selon la position du plongeur 32 à l'intérieur du piston 20, cet agencement permet au clapet 40 d'être constamment en appui étanche avec l'un au moins des sièges de valve 32a et 20a sous l'action du ressort 44.

Un second passage 46 est formé dans la partie centrale du piston 20, approximativement parallèlement à son axe X-X′, pour faire communiquer la chambre avant 16 du servomoteur avec une chambre annulaire 48 formée autour du clapet 40, à l'intérieur de la partie tubulaire 22 du piston 20. Lorsque le plongeur 32 occupe sa position arrière de repos illustrée sur la Figure, dans laquelle le clapet 40 est en appui étanche sur le siège 32a du plongeur 32 et légèrement écarté du siège 20a du piston 20, les chambres avant 16 et arrière 18 du servomoteur communiquent ainsi entre elles par le passage 46, la chambre annulaire 48, le passage de valve 40-20a et le passage 38.

D'une manière elle aussi classique, au moins un organe de butée 50 monté dans la partie centrale du piston 20 délimite la course axiale du plongeur 32 à l'intérieur de ce dernier. Le plongeur 32 est normalement maintenu dans la position arrière de repos définie par l'organe 50 au moyen d'un ressort de compression 52 interposé entre la coupelle 42 et une rondelle 54 elle-même solidaire de la tige de commande 34.

Dans sa partie centrale, le piston 20 comprend une face avant annulaire 20b au centre de laquelle débouche l'alésage 30. Cette face avant annulaire 20b du piston 20 agit sur une face arrière 56b d'une tige de poussée 56, au travers d'un disque de réaction 58 en un matériau déformable tel qu'un élastomère. De façon plus précise, la tige de poussée 56 et le disque de réaction 58 sont disposés selon l'axe X-X′ du servomoteur, dans le prolongement de la tige de commande 34 et du plongeur 32. La surface arrière 56a de la tige de poussée 56 est formée sur une plaque en forme de disque 56b constituant l'extrémité arrière de la tige 56. La plaque 56b ainsi que le disque de réaction 58 sont coiffés par un capot 60 centré sur l'axe X-X′ du servomoteur et coopérant avec une gorge annulaire formée sur la partie centrale du piston 20, autour de la face avant annulaire 20b de ce dernier.

Le fonctionnement de ce servomoteur connu est classique et peut être décrit succinctement de la façon suivante.

Lorsque le servomoteur est installé sur un véhicule, la chambre avant 16 communique en permanence avec une source de vide.

Dans un premier temps, l'enfoncement de la pédale de frein par le conducteur a pour effet d'égaler l'effort de précontrainte du ressort 52 diminué de l'effort de précontrainte du ressort 44. Au cours de ce léger déplacement de la tige de commande 34 et du plongeur 32, le clapet 40, sous l'action du ressort 44, suit le siège 32a du plongeur 32, jusqu'à ce qu'il vienne au contact du siège 20a du piston ; les chambres avant 16 et arrière 18 du servomoteur sont alors isolées l'une de l'autre.

Dans une deuxième phase de l'actionnement du frein, le plongeur 32 est déplacé suffisamment vers l'avant pour que le clapet soit en contact étanche avec le siège 20a du piston et commence à s'éloigner du siège 32a du plongeur. Dans ces conditions, la chambre arrière 18 du servomoteur est isolée de la chambre avant 16 et entre en communication avec l'atmosphère.

La chambre arrière 18, qui communiquait auparavant avec la chambre avant 16 et se trouvait donc sous une pression réduite, aspire donc l'air à la pression atmosphérique à travers le passage de valve de faible section entre le clapet 40 et le siège de plongeur 32a. Il s'ensuit donc une entrave importante au passage de l'air, et des sifflements dûs à la traversée de l'interstice entre le clapet 40 et le siège de plongeur 32a.

On comprend donc qu'il est hautement désirable de réaliser un servomoteur où l'écoulement de l'air soit le moins turbulent possible pour qu'il fonctionne silencieusement.

Ce but est atteint grâce à l'invention dont un exemple d'un mode de réalisation est représenté sur la Figure.

Selon l'invention, il est prévu de guider ou canaliser l'air en mouvement pour qu'il parvienne dans la zone du clapet 40, et en particulier dans le passage de valve 32a-40 entre le clapet 40 et le siège de valve 32a du plongeur, dans les meilleures conditions possibles. Ce guidage est prévu en amont du clapet 40 en direction axiale, c'est-à-dire derrière le plan du clapet 40, au voisinage du ressort 52. Il est réalisé simplement en prévoyant sur la tige de commande 34 une surface déflectrice 62, par exemple conique, ou présentant un certain rayon de courbure comme on l'a représenté sur la Figure. Cette surface déflectrice 62 s'étend de l'espace annulaire 36 entre la tige de commande 34 et la partie tubulaire 22 du piston 20 jusqu'au niveau du clapet 40.

La surface déflectrice 62 peut être constituée par le flanc aval d'une gorge concave large 64 formée dans la tige de commande 34, comme représenté sur la moitié supérieure de la Figure. Elle peut également être constituée par le flanc amont d'une surépaisseur convexe 66 de la tige 34, comme représenté sur la moitié inférieure de la Figure. Cette surépaisseur 66 peut être venue de matière avec la tige 34, ou constituée d'une bague enfilée sur la tige 34.

On comprend donc que, lors de la deuxième phase de fonctionnement décrite plus haut, les couches d'air provenant de l'espace annulaire 36 et en mouvement axial vers l'avant vont rencontrer la surface déflectrice 62 et être ainsi déviées vers le passage de valve 32a-40 en traversant la surface que forment les spires du ressort 52 de façon beaucoup plus aisée que si elles pouvaient seulement circuler tangentiellement à cette surface. L'air en mouvement ne subit donc plus de brusques changements de direction et n'est donc plus susceptible d'engendrer des bruits ou des sifflements lors de cette phase d'aspiration vers la chambre arrière.

Différentes améliorations peuvent être apportées afin de parfaire le guidage de l'air en mouvement. On peut par exemple prévoir, à l'extrémité de l'alésage borgne 35 débouchant à l'arrière du plongeur 32, une surface concave par exemple chaufreinée 68, tronconique ou présentant un certain rayon de courbure. Une telle surface concave 68 joue également le rôle d'une surface déflectrice en prolongeant l'action de la surface 62 de la tige 34. En effet, les filets d'air qui ont été déviés par la surface 62 de la tige 34 sont reçues par la surface 68 du plongeur 32 et sont ainsi guidés jusqu'au passage de valve 32a-40 lui-même. Les turbulences de l'air en mouvement s'en trouvent donc encore davantage réduites, ainsi que les bruits de fonctionnement.

On peut également prévoir, dans la partie tubulaire arrière 22 du piston 20, et plus précisément dans l'espace annulaire 36 une surface déflectrice 70 concave pour précéder l'action de la surface 62 de la tige 34. Une telle surface a pour rôle de recevoir le flux d'air en mouvement pour le diriger préférentiellement sur la surface 62 de la tige 34. Cette surface 70 peut par exemple être formé sur la paroi interne d'une bague 72 insérée dans l'espace annulaire 36.

On voit donc bien qu'on a réalisé conformément à la présente invention un servomoteur pneumatique dans lequel la disposition particulière de surfaces déflectrices lui permet de fonctionner silencieusement. Bien entendu, l'invention n'est pas limité au mode de réalisation qui a été décrit à titre d'exemple, mais est susceptible de recevoir de nombreuses variantes qui apparaîtront à l'homme du métier. C'est ainsi par exemple que l'invention pourra être appliquée à des servomoteurs en tandem ou à chambre additionnelle.

## Revendications

1. Servomoteur pneumatique d'assistance au freinage comportant une enveloppe (10) à l'intérieur de laquelle se trouve un piston (20) comportant une partie tubulaire arrière (22) et une paroi mobile (12) qui définit une chambre avant (16) reliée en permanence à une source de dépression et une chambre arrière (18) reliée sélectivement à la chambre avant (16) ou à l'atmosphère par un moyen de valve (20a, 32a, 40) actionné par une tige de commande (34) susceptible de s'appuyer, par l'intermédiaire d'un plongeur (32), sur l'une des faces d'un disque de réaction (58) solidaire d'une tige de poussée (56), le moyen de valve (20a, 32a, 40) comportant un clapet (40) coopérant par une partie active avec un premier siège de valve (32a) formé sur le plongeur (32) et avec un second siège de valve (20a) formé sur le piston (20), et la tige de commande étant rappelée vers l'arrière au moyen d'un ressort (52) logé dans un espace annulaire (36) entre cette tige de commande (34) et la partie tubulaire arrière (22) du piston (20) en amont du moyen de valve, ce ressort étant formé de spires qui définissent une surface, le servomoteur comprenant, d'un côté au moins du ressort (52), des moyens de guidage d'air propres à augmenter l'angle sous lequel l'air en mouvement dans l'espace annulaire (36) attaque ladite surface de spires, caractérisé en ce que les moyens de guidage (62) comprennent une surface de guidage (62) concave aval formée dans la tige de commande (34) en aval du ressort (52).

2. Servomoteur selon la revendication 1, caractérisé en ce que la surface de guidage aval (62) comprend le flanc aval d'une gorge concave (64) formée dans la tige de commande (34).

3. Servomoteur selon la revendication 1, caractérisé en ce que la surface de guidage aval (62) comprend le flanc amont d'une surépaisseur convexe (66) de la tige (34).

4. Servomoteur selon l'une quelconque des revendications précédentes, caractérisé en ce que les moyens de guidage (68) d'air comprennent une surface concave aval (68) formée à l'extrémité arrière du plongeur (32).

5. Servomoteur selon l'une quelconque des revendications 1 à 4, caractérisé en ce que les moyens de guidage (70) d'air comprennent une surface concave amont (70) située dans ledit espace annulaire (36) en amont du ressort (52).

6. Servomoteur selon la revendication 5, caractérisé en ce que la surface concave amont (70) comprend la paroi interne (70) d'une bague (72) insérée dans l'espace annulaire (36).

## Claims

1. Pneumatic brake-booster comprising a casing (10) inside which is situated a piston (20) comprising a rear tubular part (22) and a movable wall (12) which defines a front chamber (16) permanently connected to a vacuum source and a rear chamber (18) selectively connected to the front chamber (16) or to the atmosphere by a valve means (20a, 32a, 40) actuated by a control rod (34) adapted to bear by means of a plunger (32) against one face of a reaction disk (58) fastened to a push rod (56), the valve means (20a, 32a, 40) comprising a valve closure member (40) cooperating by an active part with a first valve seat (32a) formed on the plunger (32) and with a second valve seat (20a) formed on the piston (20), and the control rod being returned rearwards by means of a spring (52) seated in an annular space (36) between this control rod (34) and the rear tubular part (22) of the piston (20) upstream of the valve means, this spring being formed from turns which define a surface, the booster comprising, at least on one side of the spring (52), air-guide means capable of increasing the angle at which the air moving in the annular space (36) engages the said surface of turns, characterized in that the guide means (62) consist of a downstream concave guide surface (62) formed in the control rod (34) downstream of the spring (52).

2. Booster according to claim 1, characterized in that the downstream guide surface (62) consists of the downstream flank of a concave groove (64) formed in the control rod (34).

3. Booster according to claim 1, characterized in that the downstream guide surface (62) consists of the upstream flank of a convex thickened portion (66) of the rod (34).

4. Booster as claimed in any of the preceding claims, characterized in that the air-guide means (68) consist of a concave downstream surface (68) formed at the rear end of the plunger (32).

5. Booster as claimed in any of claims 1 to 4, characterized in that the air-guide means (70) consist of a concave upstream surface (70) situated in said annular space (36) upstream of the spring (52).

6. Booster according to claim 5, characterized in that the concave upstream surface (70) consists of the inside wall (70) of a ring (72) inserted into the annular space (36).

## Patentansprüche

1. Pneumatischer Servomotor zur Bremsunterstützung, mit einem Gehäuse (10), in dessen Inneren sich ein Kolben (20) befindet, der einen rohrförmigen hinteren Abschnitt (22) aufweist, und einer beweglichen Wand (12), die eine permanent mit einer Unterdruckquelle verbundene vordere Kammer (16) und eine hintere Kammer (18) abgrenzt, die wahlweise mit der vorderen Kammer (16) oder der Atmosphäre über ein Ventilmittel (20a, 32a, 40) verbunden ist, das von einer Steuerstange (34) betätigt wird, die in der Lage ist, sich über einen Tauchkolben (32) an einer der Seiten einer fest mit einer Schubstange (56) verbundenen Reaktionsscheibe (58) abzustützen, wobei das Ventilmittel (20a, 32a, 40) enthält, das mit einem auf dem Tauchkolben (32) gebildeten ersten Ventilsitz (32a) und mit einem auf den Kolben (20) gebildeten zweiten Ventilsitz (20a) zusammenwirkt, und wobei die Steuerstange mit Hilfe einer Feder (52) nach hinten gehalten wird, die in einem Ringraum (36) zwischen der Steuerstange (34) und dem rohrförmigen hinteren Abschnitt (22) des Kolbens (20) auf der Zuströmseite des Ventilmittels untergebracht ist, wobei die Feder von Spiralen gebildet ist, die eine Fläche definieren, wobei der Servomotor wenigstens auf einer Seite der Feder (52) Luftleitmittel zum Vergrößern des Winkels aufweist, unter dem die Luft bei der Bewegung in dem Ringraum (36) auf die Fläche der Windungen einwirkt, dadurch gekennzeichnet, daß die Leitmittel (62) auf der Abströmseite eine konkave Leitfläche (62) enthalten, die in der Steuerstange (34) auf der Abströmseite der Feder (52) gebildet ist.

2. Servomotor nach Anspruch 1, dadurch gekennzeichnet, daß die abströmseitige Leitfläche (62) die Abströmflanke einer in der Steuerstange (34) gebildeten konkaven Einschnürung (64) aufweist.

3. Servomotor nach Anspruch 1, dadurch gekennzeichnet, daß die abströmseitige Leitfläche (62) die zuströmseitige Flanke einer konvexen Verdickung (66) der Stange (34) aufweist.

4. Servomotor nach einem der vorhergehenden Ansprüche, dadurch gekennzeichnet, daß die Luftleitmittel (68) eine abströmseitige konkave Fläche (68) aufweisen, die am Hinterende des Tauchkolbens (32) gebildet ist.

5. Servomotor nach einem der Ansprüche 1 bis 4, dadurch gekennzeichnet, daß die Luftleitmittel (70) zuströmseitig eine konkave Fläche (70) aufweisen, die in dem Ringraum (36) zuströmseitig bezüglich der Feder (52) liegt.

6. Servomotor nach Anspruch 5, dadurch gekennzeichnet, daß die zuströmseitige konkave Fläche (70) die Innenwand (70) eines in den Ringraum (36) eingefügten Rings (72) aufweist.
